# EUROPEAN PATENT SPECIFICATION

(11) **EP 1 650 017 B1**
(45) Date of publication and mention of the grant of the patent: **22.01.2014**
(21) Application number: 05023007.7
(22) Date of filing: 21.10.2005
(51) Int. Cl.: B32B 25/08, F16L 11/04, B32B 1/08

(54) **Resin pipe**
Mehrschichtiger Kunststoffschlauch
Tube plastique multicouche

(30) Priority: 25.10.2004 JP 2004309698
(43) Date of publication of application: 26.04.2006
(73) Proprietor: Sanoh Kogyo Kabushiki Kaisha, Tokyo-to 150 0013 (JP)
(72) Inventor: Sato, Masatomi, Koga-shi Ibaraki-ken (JP)
(74) Representative: HOFFMANN EITLE

(56) References cited:
- EP-A- 0 522 380
- EP-A1- 1 650 017
- DE-U1- 29 822 212
- FR-A- 2 820 805
- PATENT ABSTRACTS OF JAPAN vol. 1999, no. 04, 30 April 1999 (1999-04-30) & JP 11 020073 A (DAINIPPON PRINTING CO LTD), 26 January 1999 (1999-01-26)
- PATENT ABSTRACTS OF JAPAN vol. 1997, no. 09, 30 September 1997 (1997-09-30) & JP 09 133266 A (SEKISUI CHEM CO LTD), 20 May 1997 (1997-05-20)

## Description

### BACKGROUND OF THE INVENTION

### Field of the Invention

The present invention relates to a resin pipe for an automotive fuel line and, more particularly, to a resin pipe coated with a silicon film.

### Description of the Related Art

Metal pipes having an outside surface plated or coated with a resin film have been generally used as fuel pipes on automobiles. Efforts have been made for the improvement of coating materials and structure of coating layers to improve the corrosion resistance and chemical resistance of pipes.

Recently, resin pipes have been used as well as metal pipes for fuel lines. Resin pipes have many advantages over metal pipes. Resin pipes are not rusted, can be easily processed, are lightweight and increase the degree of freedom of design. The permeability to fuel of resins is the most serious problem in using resin pipes as fuel pipes. Environmental problems have necessitated imposing severe legal controls on fuel lines in Europe in recent years. Conventional resin pipes are unable to meet low permeability required by regulations.

The term "low-permeability resin" is used to indicate resins meeting a quality determined by the following permeability test methods. A CARB DBL method which is carried out by a SHED testing machine is a representative permeability test method of testing resins for fuel pipes.

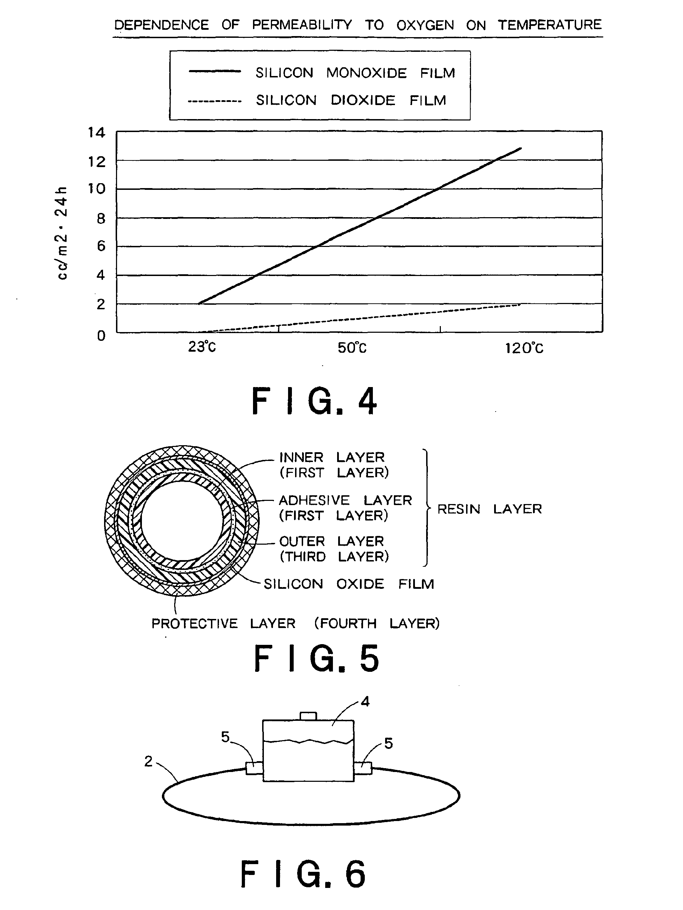

Referring to Fig. 6, a resin pipe 2 having an inside diameter of 6 mm, an outside diameter of 8 mm and a length of 5 m or above is tested. The opposite ends of the resin pipe 2 are connected by sealing joints 5 to a sealed container 4 made of a stainless steel. The resin pipe 2 filled up with test fuel is held at 40°C for fifty days or longer for pretreatment. Then, the pretreated resin pipe 2 is connected to a SHED testing machine, not shown. The SHED testing machine measures the quantity of hydrocarbons permeated the resin pipe 2 and contained in the test fuel contained in the resin pipe 2. When the measured quantity of hydrocarbons is 50 mg/m·day or below, the resin forming the resin pipe 2 is called a low-permeability resin.

A conventional resin pipe is provided with a functional layer having low permeability and made of a low-permeability resin. Since the permeation-resisting ability of such a resin pipe to resist the permeation of fuel is dependent on the permeation-resisting ability of the low-permeability resin forming the functional layer, the permeation-resisting ability of the resin pipe to resist the permeation of fuel cannot exceed that of the low-permeability resin.

FR-A-2 820 805 discloses a flexible tube in thermoplastic resin material, comprising a nozzle and a body. Said body is a structure of one or more thermoplastic layers, whereby the outermost layer has been coated externally with a layer of varnish, and whereby a silicon oxide film is coated in between said outermost layer and said varnish coating. Moreover, a method of making said flexible tube involves submitting a rotating tube to a flame treatment in which the combustion gas in enriched with a silane gas before applying the varnish.

### SUMMARY OF THE INVENTION

Accordingly, it is an object of the present invention to solve problems in the foregoing prior art and to provide a multilayer-wall resin pipe having an outside surface coated with a silicon film for improving the permeation-resisting ability of the resin pipe.

The present invention provides a resin pipe of multilayer construction including a plurality of resin layers respectively made of thermoplastic resins, wherein the surface of any one of the plurality of resin layers is coated with a silicon oxide film according to claim 1.

In the resin pipe according to the present invention, the resin layer having the surface coated with the silicon oxide film may be the outermost one of the plurality of resin layers.

In the resin pipe according to the present invention, the silicon oxide film may be formed between the adjacent resin layers of the plurality of resin layers.

The resin pipe according to the present invention may further include a protective layer coating the outside surface of the silicon oxide film to protect the silicon oxide film.

In the resin pipe according to the present invention, the protective layer may be made of rubber or a thermoplastic elastomer.

In the resin pipe according to the present invention, the silicon oxide film is formed by a burning reaction of an organic silicon compound in flames.

The flames are projected by two combustors disposed beside a feed path along which the resin pipe is fed to form the silicon oxide film thereon.

Said two combustors are disposed obliquely opposite to each other on the opposite sides of the feed path, respectively.

In the resin pipe according to the present invention, the combustor may have a flat flame projecting opening, through which flames are projected, elongated in a direction in which the resin pipe is fed to form the silicon oxide film thereon.

In the resin pipe according to the present invention, a liquefied petroleum gas supply pipe (an LPG supply pipe) for carrying a liquefied petroleum gas (an LPG) and a silicon adding material supply pipe for carrying a silicon adding material containing an organic silicon compound may be connected to the combustor, and the combustor may be provided with a combustion chamber in which the LPG and the silicon adding material are burned.

The resin pipe according to the present invention may be intended for use in an automotive fuel line.

Since the outside surface of the outermost layer of the resin pipe of the present invention is coated with the silicon film, the fuel permeated the resin layers is stopped by the silicon film. Thus the resin pipe has a remarkably improved permeation-resisting ability.

### BRIEF DESCRIPTION OF THE DRAWINGS

Fig. 1 is a cross-sectional view of a resin pipe in a first embodiment according to the present invention;
Fig. 2 is a schematic plan view of a resin pipe manufacturing line for manufacturing the resin pipe shown in Fig. 1;
Fig. 3 is a schematic perspective view of assistance in explaining a silicon oxide film forming process;
Fig. 4 is a graph comparatively showing the respective permeation-resisting abilities of a silicon dioxide film and a silicon monoxide film;
Fig. 5 is a cross-sectional view of a resin pipe in a second embodiment according to the present invention; and
Fig. 6 is a diagrammatic view of assistance in explaining a method of testing the permeation-resisting ability of resin pipes.

### DESCRIPTION OF THE PREFERRED EMBODIMENTS

Resin pipes in preferred embodiments according to the present invention will be described with reference to the accompanying drawings.

### First Embodiment

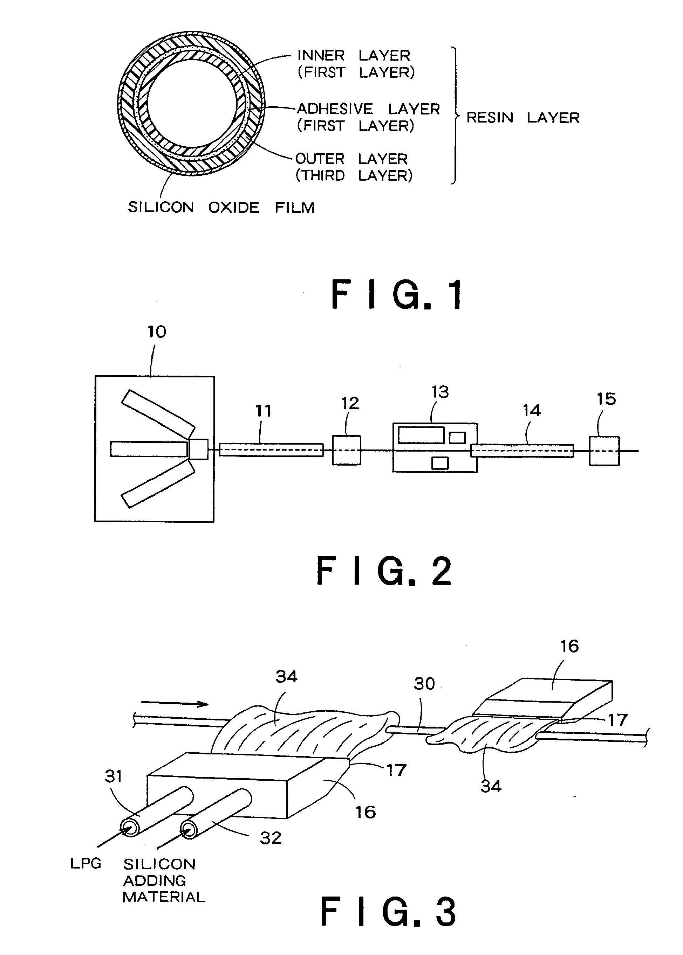

Referring to Fig. 1 showing a resin pipe in a first embodiment according to the present invention in a cross-sectional view, the resin pipe has three resin layers. The three layers are a first layer, namely, an inner layer, a second layer, namely, an adhesive layer, and a third layer, namely, an outer layer. The outside surface of the third layer is coated with a silicon oxide film. The first and the third layer are made of any one of resins generally used for making fuel pipes of this type, such as polyamide resins including nylon 11, nylon 12 and nylon 6.

Referring to Fig. 2 showing a resin pipe manufacturing line for manufacturing the resin pipe by a coextrusion process, the resin pipe manufacturing line is formed by arranging an extruder 10, a cooling device 11, a take-up device 12, a coating device 13, a cooling device 14 and a take-up device 15 in that order in a direction in which a resin pipe is carried.

The extruder 10 extrudes molten resins respectively for forming the first, the second and the third layer to form the resin pipe. The resin pipe is passed through a water tank included in the cooling device 11 to cool and set the resin pipe. After the resins forming the first, the second and the third layer have been thus solidified, the take-up device 12 takes up the resin pipe and delivers the resin pipe to the coating device 13. The coating device d13 burns an organic silicon compound and an LPG in a space surrounding the resin pipe to coat the third layer with a silicon oxide film.

Fig. 3 shows combustors 16 included in the coating device 13. In Fig. 3, indicated at 30 is the resin pipe delivered from the take-up device 12. The combustors 16 are disposed near a feed path along which the resin pipe 30 is moved obliquely opposite to each other respectively on the opposite sides of the feed path. The two combustors 16 are disposed obliquely opposite to each other to coat the resin pipe 30 uniformly with a silicon oxide film. The coating device 13 may be provided with three or four combustors instead of the two combustors 16. An LPG supply pipe 31 for carrying an LPG and a silicon adding material supply pipe 32 for carrying a silicon adding material containing an organic silicon compound, such as carbon silicate (SiC) are connected to each combustor 16. Each combustor 16 is provided with a flat flame projecting opening 17. A flat flame 34 is projected through the flame projecting opening 17. The combustor 16 is provided with a combustion chamber. The LPG and the organic silicon compound are burned in the combustion chamber to cause reactions between the organic silicon compound and a hydrocarbon represented by chemical formula (1) or (2). The flame 34 is projected through the flame projecting opening 17 toward the resin pipe 30 to coat the resin pipe 30 passing through the flame 34 with a silicon dioxide film or a silicon monoxide film.

SiC + C₃H₈ + 7O₂ → SiO₂ + 4H₂O + 4CO₂ (1)

2SiC + C₃H₈ + 7O₂ → 2SiO + 4H₂O + 4CO₂ (2)

The resin pipe of the present invention having the outside surface coated with the silicon dioxide film or the silicon monoxide film exercises the following effects when used for forming an automotive fuel line.

A very small amount of fuel flowing through a resin pipe in an automotive fuel line permeates the resin pipe and is discharged outside. All kinds of resins are permeable to fuel in greater or lesser degrees. An ethylene-vinyl alcohol resin (EvOH) is an example of a functional resin used as a material for resin pipes. An EvOH is a functional resin having an excellent gas-barrier characteristic.

Table 1 shows the results of the permeability test of a silicon film and an EvOH film. As obvious from Table 1, the permeability to ethanol and steam of the silicon film is lower than that of the EvOH film having a comparatively low permeability among resin films.

The resin pipe in this embodiment is a composite multilayer structure having a resin body made of a resin inferior in permeation-resisting ability but inexpensive and excellent in workability, such as a polyamide resin and a silicon film coating the outside surface of the body. Fuel permeated the resin body is stopped by the silicon film. Thus the resin pipe of the present invention has an improved permeation-resisting ability far higher than that of the conventional resin pipe made of a low-permeability resin.

There are two types of silicon films; a first silicon film containing silicon monoxide as a principal component and a second silicon film containing silicon dioxide as a principal component. Although both the first and the second silicon film are superior in permeation-resisting ability to resin films, the first and the second silicon film differ from each other in permeability to a gas (oxygen gas) as shown in Fig. 4. Fig 4 comparatively shows the variation of the respective permeabilities to oxygen gas of a silicon monoxide film and a silicon dioxide film with temperature. It is obvious from Fig. 4 that both the respective permeabilities of the silicon monoxide film and the silicon dioxide film in crease as temperature rises and the permeability to gas of the silicon dioxide film is far lower than that of the silicon monoxide film.

Either the silicon monoxide film or the silicon dioxide film can be selectively formed over the outside surface of the resin tube in this embodiment by properly adjusting the flame temperature in the combustors 16 of the coating device 13. The outside surface of the resin pipe can be coated with a silicon dioxide film when the LPG is supplied at a comparatively high rate to the combustors 16 and the flames in the combustors 16 have a comparatively high frame temperature between 1300 and 1600°C. The outside surface of the resin pipe can be coated with a silicon monoxide film when the LPG is supplied at a comparatively low rate to the combustors 16 and the flames in the combustors 16 have a comparatively low frame temperature on the order of 800°C.

Either of a silicon monoxide film and the silicon dioxide film can be formed by properly adjusting the flame temperature in the combustors. Therefore, a resin pipe required to have a high permeation-resisting ability is coated with a silicon dioxide film, while a resin pipe required to have a moderate permeation-resisting ability is coated with a silicon monoxide film.

### Second Embodiment

Referring to Fig. 5 showing a resin pipe in a second embodiment according to the present invention in a cross-sectional view, the resin pipe has three resin layers. The three layers are a first layer, namely, an inner layer to be exposed to fuel, a second layer, namely, an adhesive layer, and a third layer, namely, an outer layer. The outside surface of the third layer, similarly to that of the third layer of the resin pipe in the first embodiment, is coated with a silicon oxide film. The resin pipe in the second embodiment differs from the resin pipe in the first embodiment in that the silicon oxide film is coated with a fourth layer, namely, a protective layer. Preferably, the fourth layer as a protective layer is made of a thermoplastic elastomer or rubber, such as an EPDM. The fourth layer protects the silicon oxide film and increases the impact resistance of the resin pipe. Thus the silicon oxide film is protected from external damaging actions to maintain the low permeability of the resin pipe for a long period of use.

**Table 1 Permeability test of a silicon film and an EvOH film**

| | Silicon film | EvOH film |
|---|---|---|
| Ethanol | 0.007g.mm/m².24h | 0.26.mm/m².24h |
| Steam | 0.003g.mm/m².24h | 2.00.mm/m².24h |

## Claims

1. A resin pipe of multilayer construction comprising a plurality of resin layers respectively made of thermoplastic resins,
wherein the surface of any one of the plurality of resin layers is coated with a silicon oxide film by a burning reaction of an organic silicon compound in flames according to one of chemical reactions
i)
SiC+C₃H₈+7O₂→SiO₂+4H₂O+4CO₂;
and
ii)
2SiC+C₃H₈+7O₂→2SiO+4H₂O+4CO₂,
and
wherein the flames are projected by two combustors disposed obliquely opposite to each other on the opposite sides of the feed path along which the resin pipe is fed to form the silicon oxide film thereon.

2. The resin pipe according to claim 1, wherein the resin layer having the surface coated with the silicon oxide film is the outermost one of the plurality of resin layers.

3. The resin pipe according to claim 1, wherein the silicon oxide film is formed between the adjacent resin layers of the plurality of resin layers.

4. The resin pipe according to claim 1 further comprising a protective layer coating the outside surface of the silicon oxide film to protect the silicon oxide film.

5. The resin pipe according to claim 4, wherein the protective layer is made of rubber or a thermoplastic elastomer.

6. The resin pipe according to Claim 1, wherein each combustor has a flat flame projecting opening through which flames are projected and the flat flame projecting opening is elongated in a direction in which the resin pipe is fed to form the silicon oxide film thereon.

7. The resin pipe according to claim 6, wherein a liquefied petroleum gas supply pipe for carrying a liquefied petroleum gas and a silicon adding material supply pipe for carrying a silicon adding material containing an organic silicon compound are connected to the combustor, and the combustor is provided with a combustion chamber in which the liquid petroleum gas and the silicon adding material are burned.

8. The resin pipe according to any one of claims 1 - 7, intended for use in an automotive fuel line.

## Patentansprüche

1. Harzrohr in mehrschichtiger Bauweise mit mehreren Harzschichten, die jeweils aus thermoplastischen Harzen hergestellt sind,
wobei die Oberfläche von jeder der mehreren Harzschichten durch eine Verbrennungsreaktion einer organischen Siliziumverbindung in Flammen nach einer der chemischen Reaktionen
i)
SiC + C₃H₈ + 7O₂ -> SiO₂ + 4H₂O + 4CO₂;
und
ii)
2SiC + C₃H₈ + 7O₂ -> 2SiO + 4H₂O + 4CO₂
mit einem Siliziumoxidfilm beschichten ist, und wobei die Flammen von zwei Brennern ausgeworfen werden, die schräg gegenüber voneinander, auf den gegenüberliegenden Seiten des Förderpfades angeordnet sind, entlang dessen das Harzrohr gefördert wird, um den Siliziumoxidfilm darauf auszubilden.

2. Harzrohr nach Anspruch 1, bei dem die Harzschicht, deren Oberfläche mit dem Siliziumoxidfilm beschichtet ist, die äußerste der mehreren Harzschichten ist.

3. Harzrohr nach Anspruch 1, bei dem der Siliziumoxidfilm zwischen den benachbarten Harzschichten der mehreren Harzschichten ausgebildet ist.

4. Harzrohr nach Anspruch 1, ferner mit einer Schutzschicht, welche die Außenoberfläche des Siliziumoxidfilms derart umhüllt, dass der Siliziumoxidfilm geschützt ist.

5. Harzrohr nach Anspruch 4, bei dem die Schutzschicht aus Gummi oder einem thermoplastischen Elastomer ausgebildet ist.

6. Harzrohr nach Anspruch 1, bei dem jeder Brenner eine flache Flammenauswurföffnung aufweist, durch die Flammen ausgeworfen werden, und die flache Flammenauswurföffnung in einer Richtung ausgedehnt ist, in welcher das Harzrohr gefördert wird, um darauf den Siliziumoxidfilm auszubilden.

7. Harzrohr nach Anspruch 6, bei dem ein Zufuhrrohr für verflüssigtes Petroleumgas, um ein verflüssigtes Petroleumgas zu fördern, und einen Zufuhrrohr für Silizium-Zugabe-Material, um ein Silizium-Zugabe-Material zu fördern, das eine organische Siliziumverbindung enthält, an den Brenner angeschlossen sind, und der Brenner mit einer Brennkammer versehen ist, in der das flüssige Petroleumgas und das Silizium-Zugabe-Material verbrannt werden.

8. Harzsrohr nach einem der Ansprüche 1 bis 7, das zur Verwendung in einer Automobil-Kraftstoffleitung vorgesehen ist.

## Revendications

1. Tuyau en résine à structure multicouche comprenant une pluralité de couches de résine réalisées respectivement en résines thermoplastiques,
dans lequel la surface de l'une quelconque de la pluralité de couches de résine est revêtue d'un film d'oxyde de silicium par une réaction de combustion d'un composé de silicium organique dans des flammes selon l'une des réactions chimiques
i)
SiC + C₃H₈ + 7O₂ → SiO₂ + 4H₂O + 4CO₂ ;
et
ii)
2SiC + C₃H₈ + 7O₂ → 2SiO + 4H₂O + 4CO₂,
et
où les flammes sont projetées par deux brûleurs disposés de manière oblique l'un en face de l'autre sur les côtés opposés du trajet d'acheminement le long duquel le tuyau en résine est acheminé pour former le film d'oxyde de silicium sur celui-ci.

2. Tuyau en résine selon la revendication 1, dans lequel la couche de résine ayant la surface revêtue avec le film d'oxyde de silicium est la couche la plus externe de la pluralité de couches de résine.

3. Tuyau en résine selon la revendication 1, dans lequel le film d'oxyde de silicium est formé entre les couches de résine adjacentes de la pluralité de couches de résine.

4. Tuyau en résine selon la revendication 1, comprenant en outre une couche de protection recouvrant la surface externe du film d'oxyde de silicium afin de protéger le film d'oxyde de silicium.

5. Tuyau en résine selon la revendication 4, dans lequel la couche de protection est réalisée en caoutchouc ou en un élastomère thermoplastique.

6. Tuyau en résine selon la revendication 1, dans lequel chaque brûleur a une ouverture de projection de flamme plate à travers laquelle les flammes sont projetées et l'ouverture de projection de flamme plate est allongée dans une direction dans laquelle le tuyau en résine est acheminé pour former le film d'oxyde de silicium sur celui-ci.

7. Tuyau en résine selon la revendication 6, dans lequel un tuyau d'alimentation en gaz de pétrole liquéfié destiné à transporter un gaz de pétrole liquéfié et un tuyau d'alimentation en matériau d'ajout de silicium destiné à transporter un matériau d'ajout de silicium contenant un composé de silicium organique sont reliés au brûleur, et le brûleur est pourvu d'une chambre de combustion dans laquelle le gaz de pétrole liquide et le matériau d'ajout de silicium sont brûlés.

8. Tuyau en résine selon l'une quelconque des revendications 1 à 7, destiné à être utilisé dans une conduite de carburant pour automobile.
